# EUROPEAN PATENT APPLICATION

(11) **EP 2 727 643 A1**
(43) Date of publication of application: **07.05.2014**
(21) Application number: 12190793.5
(22) Date of filing: 31.10.2012
(51) Int. Cl.: B01D 61/14, B01D 63/08

(54) **Cross-flow ultrafiltration device and method for concentration of pharmaceutical compositions**

(71) Applicant: Takeda GmbH, 78467 Konstanz (DE)
(72) Inventor: Rast, Markus, 78315 Radolfzell (DE)
(74) Representative: Wild, Robert

(57) **Abstract**

The present invention relates to increasing concentration of a therapeutically active biomolecule in a pharmaceutical composition for immediate administration to the patient. In particular, the present invention provides a filtering adapter (100), a filtration device (101), and a method of concentrating a therapeutically active biomolecule in a solution. In specific embodiments, syringes (102,103) are fluid-tightly attached to a filtering adapter, which provides for a filtration functionality by means of e. g. an ultrafiltration membrane. The filtration process may be carried out until the pharmaceutical composition is provided in a volume and concentration which is ready for administration. Furthermore, a further syringe may be attached to the filtering adapter to remove the desired volume with the desired concentration from the filtering adapter, such that the immediate administration can be carried out.

## Description

### FIELD OF THE INVENTION

The present invention relates to filtration of pharmaceutical compositions. In particular, the present invention relates to a filtering adapter for a filtration device, a filtration device, a method of concentrating a therapeutically active biomolecule in a solution, and the use of a filtering adapter for changing a concentration of a therapeutically active biomolecule in a pharmaceutical composition.

### BACKROUND OF THE INVENTION

Highly concentrated protein solutions usually suffer from poor long-term stability. However, they may be needed for the less invasive subcutaneous administration route. One way to avoid the stability problem is to freeze-dry the product. However, freeze-drying is a time-consuming and costly process. Also, the reconstitution procedure can be tedious or cumbersome for the healthcare personnel. Moreover, freeze-drying also has its limitations as far as concentrations are concerned. Stability of the freeze-dried protein depends on the ratio of the protein concentration and certain concentrations of excipients, such as sucrose. Increasing the protein concentration may necessitate increasing the concentration of the excipients, resulting in high values for osmolality. However, high osmolalities can cause pain at the site of injection.

US 2009/0166290 relates to an automated cross-flow filtration method and system for separating a component of interest from one or more other components in a solution.

US 6,837,995 discloses a device for concentrating and/or purifying macro-molecules in liquid wherein the concentration/purification is accomplished by a membrane separating concentration and filtration chambers.

US 6,252,055 refers to a method for producing a concentrated antibody preparation comprising the steps of filtering the antibody preparation through a retentate side of a filtering membrane using ultrafiltration to produce filtrate and circulating the filtrate back to the retentate side.

US 4,751,003 discloses a process for the separation of biotechno logically produced materials from a cell suspension by cross-flow microfiltration to obtain a high specific permeate flux.

US 2006/0182740 provides a method for producing a concentrated antibody preparation including a step of subjecting the antibody preparation to membrane filtration.

US 2010/0196961 discloses a method for concentrating an immunoglobulin solution by tangential flow filtration wherein the transmembrane pressure and cross-flow are variable.

US 6,375,855 relates to a device for concentrating and/or purifying macromolecules in a solution having a concentration chamber with a sample reservoir for a liquid sample to be processed, a filter for filtering the liquid sample, and a filtrate container for collecting the filtrate.

### SUMMARY OF THE INVENTION

There is a need for devices and methods suitable for providing ready-to-use pharmaceutical compositions.

The object of the present invention is solved by the subject-matter of the independent claims. Further embodiments of the invention are incorporated in the dependent claims.

It is noted that the described embodiments similarly pertain to the filtering adapter for a filtration device, the method of concentrating a therapeutically active biomolecule in a solution, and the use of the filtering adapter for changing a concentration of a therapeutically active biomolecule in a pharmaceutical composition.

Furthermore, all embodiments of the present invention concerning the method may be carried out in the described sequence, although this is not necessarily the only and essential sequence. The skilled artisan gathers from the present invention that the herein described method steps can be combined to different sequences of method steps unless explicitly stated to the contrary herein.

According to an exemplary embodiment of the invention, a filtering adapter for a filtration device is described. Therein, the filtering adapter is suitable for controllably changing a concentration of a therapeutically active biomolecule in a pharmaceutical composition and/or for facilitating the provision of the pharmaceutical composition in a volume which is ready and suitable for administration to the patient. The presented filter adapter comprises a filtration membrane and a first attachment port. The first attachment port is configured to removeably attach a first container element to the filtering adapter. Furthermore the filtration membrane and the first attachment port are connected via a fluid channel such that a fluid flow from the first attachment port across the filtration membrane is facilitated or allowed.

In the attached configuration, in which the first container element is attached to the filtering adapter via the attachment port, a fluid can be guided, for example pressed or sucked, through the attachment port into the filtering adapter such that the liquid to be filtered flows across the filtration membrane.

In the context of the present invention the term "fluid flow across the filtration membrane" is to be understood to mean that tangential filtering may be allowed. The liquid to be filtered, e.g. a solution comprising a therapeutically active molecule, may be guided transversely along the surface of the filtration membrane. Perpendicular movement of the therapeutically active biomolecule through the filtration membrane is essentially avoided.

In one embodiment, the filtering adapter and/or the filtration device is a consumable product which can be used by a person such as a clinician or personnel of a hospital to manually and/or automatically increase the concentration of therapeutically active biomolecules in solution, e.g. immediately before administration.

Furthermore, in this and every other embodiment of the present invention the first container element may be a syringe. In addition or alternatively, in embodiments in which a second attachment port and a second container element are comprised, the second container element may be a syringe.

The first attachment port of the filtering adapter may provide at least two functionalities. Firstly, a container element can be permanently affixed or attached to the filtering adapter by means and/or via of the attachment port. In this embodiment, the attachment port is used as an attachment means to connect the filtering adapter with a first container element to be structurally attached. Secondly, the attachment port can provide and/or facilitate a fluid-tight fluid channel between the filtering membrane on the side of the filtering adapter and the first container element that is to be attached.

The filtering adapter may also have at least two functionalities. Firstly, the presented filtering adapter may allow for a fluid-tight provision of a fluid channel between the first attachment port and the filtration membrane, which leads to a fluid-tight fluid channel between a first container element that is attached to the first attachment port and between the filtration membrane. Secondly, the filtering adapter may provide for a filtering function to change the concentration of the therapeutically active biomolecule in a pharmaceutical composition by means of the filtration membrane.

Reducing the volume for subcutaneous injection by increasing the concentration may minimize volume-related pain for the patient. This may result in improved patient compliance. Further, the stability of the administered solution may be improved.

In this and every other embodiment of the present invention the filtration membrane may be an ultrafiltration membrane. For example, the filtration membrane may comprise at least one pore, wherein a size or dimension of the pore is from 1 nm to 100 nm. In addition or alternatively ultrafiltration membrane may provide for a molecular weight cut-off in the range between 10 kDa and 1000 kDa.

Furthermore, the filtering adapter of the present invention may be a consumable product. Therefore, the present invention provides for a handy and easy to handle device for clinicians when they desire to prepare an increased concentration of a therapeutically active biomolecule which has to be administered to the patient shortly after the concentration process.

The filtering adapter of the present invention may allow to use a prefilled syringe with a rather low concentration of a therapeutic protein and to concentrate the solution, e.g. directly before administration using a sterile filtration membrane and a first attachment port. In case of a syringe as the first container element, the attachment port may be a Luer Lok connector comprising a Luer Cone to fixate the syringe fluid-tightly at the filtering adapter. The starting concentration may be for example from 10 to 30 mg/ml and may be increased to a final concentration of 80 to 200 mg/ml, e.g. 100 to 150 mg/ml. However, also other starting and/or final concentration ranges are possible within the scope of the present invention. This also applies to the method described hereinafter in more detail.

Such a filtering adapter may be of special interest for e.g. monoclonal antibodies to be administered subcutaneously in rather high doses. Exemplary monoclonal antibodies comprise anti-CD20 antibodies such as Rituximab or Veltuzumab. However, the present invention is not limited to monoclonal antibodies. For example, any therapeutic protein or large peptide amenable to ultrafiltration, such as proteins having a molecular weight of 20 kDa or more, could be of interest. However, also other parameter ranges are not excluded from the present invention.

By means of the filtering adapter according to the invention, less concentrated solutions in a prefilled syringe may be used. This could mean reduced losses in the dead space of the manufacturing line for providing therapeutically active biomolecules. By means of the filtration membrane of the presented filtering device, only the biomolecules and not the excipients may be concentrated via the filtration with the filtration membrane. Therefore the osmolality remains essentially constant and within physiological values.

The filtering adapter may allow for an ultrafiltration such that a structure and function of the biomolecule is preserved. In this embodiment, the pressure used to effect a corresponding flow of the low concentration solution usually does not harm the functionality of the therapeutically active biomolecule.

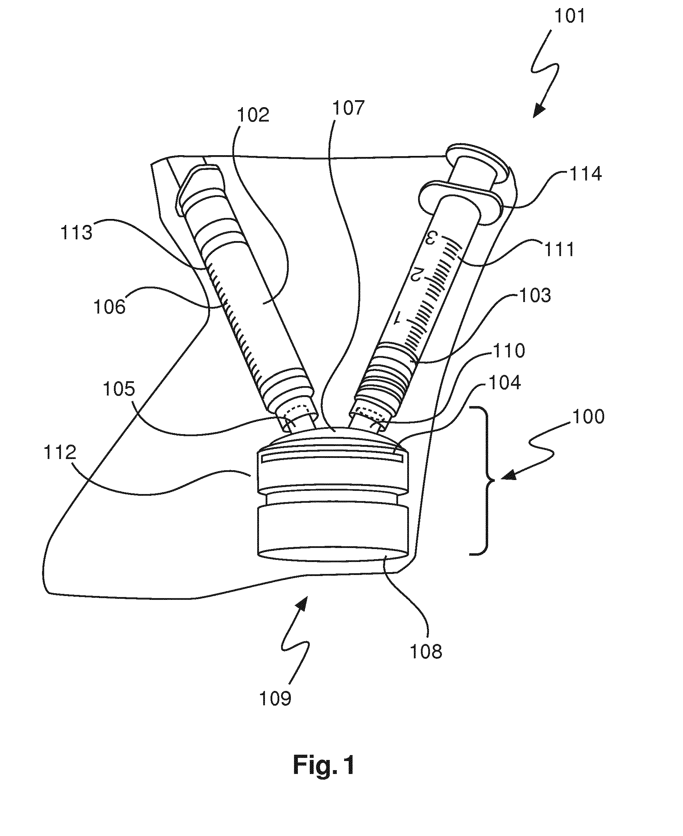

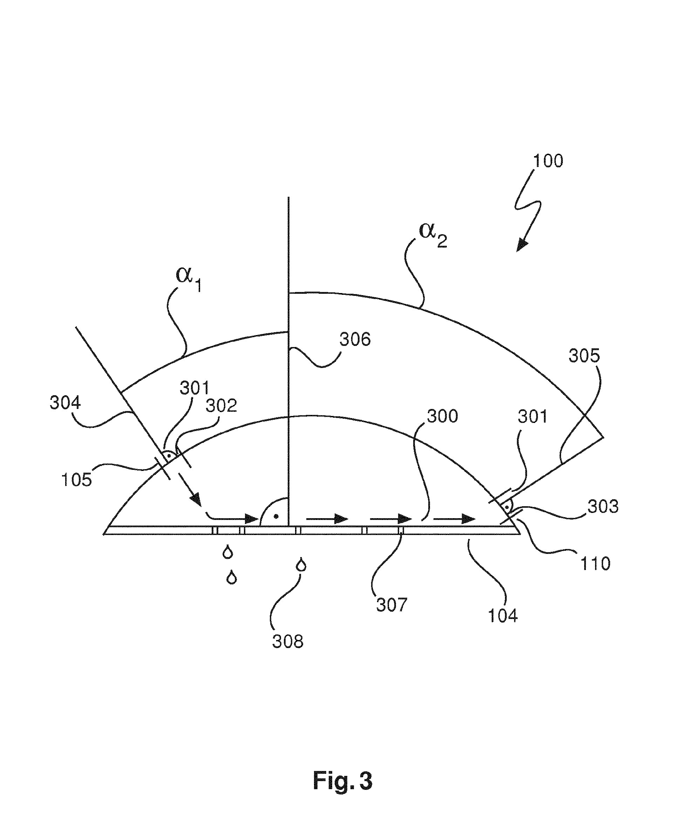

Furthermore, the filtering adapter may allow ensuring that shearing forces do not exceed a predetermined value. Due to the inclined input angle in which the fluid is received by the filtering adapter the shearing forces occurring in the filtering adapter do not harm the therapeutically active biomolecule. This inclined input angle can be gathered from Figs. 1 and 3. Based on the tangential filtering used by the present invention the shearing forces between the solution comprising a therapeutically active molecule and surfaces of the filtering adapter, especially the filtration membrane are controlled. The filtering adapter and the method of filtering disclosed herein allow ensuring that a too fast flow along the fluid membrane is avoided.

The speed of the flow along the fluid membrane can be controlled according to the present invention manually, e.g. by controlling the speed of the plunger of the syringe used as container element. Alternatively, an automatic control of the speed of flow may be comprised by the present invention. This may be applied, e.g. by means of operatively connecting the filtering adapter and the first and second container elements with a control device, like a flow control device, which automatically adjusts a feed or forward feed and the counter pressure. This control device may for example be operatively connecting to the plunger of first and second syringes as first and second container elements.

The filtering adapter may provide for a liquid flow over or across the filtration membrane, such that the filtering effect is achieved. This may be achieved by a simultaneous or sequential liquid flow tangentially over the surface of the filtration membrane. The desired contact of the liquid with the filtration surface may be achieved by several embodiments, including unidirectional liquid flow, unidirectional and circle liquid flow, and bidirectional liquid flow. For example, a pumping process in a unidirectional manner may be performed through the filtering adapter. Syringes may be used to generate the pumping pressure. However, electronic devices may also be used to generate such a liquid flow. A bidirectional liquid flow may be achieved by, for example, an alternating pushing and pulling movement of two syringes as depicted in the setup of Fig. 1.

The filtration membrane may have different geometrical shapes. For example, the filtration membrane may be long stretched in e.g. the form of a rectangle or a circular plane.

According to another exemplary embodiment, the filtration membrane is a folded filter. If desired, the folded filter may also be an ultrafiltration membrane which is provided as a folded ultrafiltration membrane. In this embodiment the contact surface between the pharmaceutical position to be filtered and the filtering membrane may be increased. Further, if desired the filtration membrane may be folded to provide for a zigzag form or may be folded to provide for a wave-like from. For example, the filtration membrane may have a sinusoidal like cross section. Thus, the filtration membrane may provide for a relief which is not flat or even. Moreover, also other uneven reliefs are comprised by the present invention although not explicitly mentioned here. The folded filter may provide for an increased effective surface area.

Therefore, this embodiment provides for a filtration membrane which comprises at least one pleat. The filtration membrane may be pleated with the liquid flow being parallel to the pleats.

Furthermore, the filtering adapter of the present invention may comprise a receiving surface for receiving the filtration membrane. Thus, when the filtration membrane is arranged and positioned in the filtering adapter for the intended use, the filtration membrane can be embedded into or onto the receiving surface. This may improve the contact between the receiving surface and the filtration membrane. In case a folded filter is used, like e.g. a filtration membrane folded in zigzag form or folded in a wave-like form, the receiving surface of the filtering adapter can comprise a correspondingly shaped cross section. Thus, the filtering adapter may comprise a zigzag formed receiving surface or a wave-like formed receiving surface or a sinusoidal like formed receiving surface. Furthermore, also other uneven reliefs of the receiving surface are comprised by the present invention although not explicitly mentioned here.

According to another exemplary embodiment of the invention the filtering adapter comprises a housing, wherein the housing may be made out of a polymer selected from the group consisting of, polyethylene (PE), polypropylene (PP), polyvinylchloride (PVC), polystyrol (PS), polytetrafluorethylen (PTFE), polymethylmethacrylate (PMMA), polyamide, polycarbonate (PC), polyethylene terephthalate (PET), poly ether ether keton (PEEK), polyurethane (PU), synthetic polymer, silicone, poly(organo)siloxane, and any combination thereof.

According to another exemplary embodiment of the invention, the first attachment port comprises a Luer Lok for removeably attaching the first container element to the filtering adapter by means of the Luer Lok.

Preferably, the first attachment port may be a Luer Cone, such that a combination of the male and female Luer Cone of the attachment port and a corresponding syringe leads to a fluid-tight attachment. In this embodiment, the first attachment port may be configured to removeably and fluid-tightly attach a syringe as the first container element to the filtering adapter.

The Luer taper may be seen as a system of small-scale fluid fittings used for making leak-free connections between a male-taper fitting and its mating female part on medical and laboratory instruments, including hypodermic syringe tips and needles or stopcocks and needles. Varieties of Luer Taper connections which may be comprised by the filtering adapter of the present invention include the Luer-Lok and Luer-Slip. Luer-Lok fittings may be securely joined by means of a tabbed hub on the female fitting which screws into threads in a sleeve on the male fitting. Luer-Slip fittings typically conform to Luer taper dimensions and may be pressed together and held by friction, as they have no threads. Luer components can be made out of metal or plastic.

According to another exemplary embodiment of the invention, the filtration membrane defines a first geometrical plane. Along this first geometrical plane the filtration membrane may expand. Furthermore, the fluid channel may be arranged in the filtering adapter relative to the filtration membrane, such that a fluid flow across the filtration membrane and parallel to the first geometrical plane is facilitated by the filtering adapter.

According to another exemplary embodiment of the invention, the filtering adapter further comprises a second attachment port, wherein the second attachment port may be configured to removeably attach a second container element to the filtering adapter.

It should be noted that in the context of the present invention, all characteristics and advantages described previously and hereinafter with respect to the first attachment port shall be understood by the skilled person as disclosed in the same manner for a second, third, or any further attachment port of the filtering adapter. In principle, the first and second attachment ports may be configured in the same way. However, if desired, modifications for one of the first and the second attachment ports are also possible. As can be gathered for example from Fig. 3, a different position with respect to the angle α can be chosen for the first and second attachment ports. However, Fig. 1 describes and depicts a symmetrical positioning of the first and second attachment ports such that two syringes may be docked on to the attachment ports in a symmetric manner.

According to another exemplary embodiment of the invention, the filtering adapter further comprises a third attachment port which may be configured to removeably attach a third container element to the filtering adapter. This attachment may also be performed in a fluid-tight manner. Furthermore, the third attachment port may be located at a position relative to the filtration membrane such that a filtrate which passes through the filtration membrane is directed to the third attachment port.

The filtrate which can be filtered into and collected by the third container element may for example comprise excipients of the pharmaceutical composition. Thus, the waste is collected, which may be seen as the "empty solution" without the therapeutically active biomolecule. The third attachment port may further comprise a thread in order to engage the third container element with the third attachment port. Friction-based mechanisms may also be used.

In general, a thread may also be comprised by the first attachment port and/or the second attachment port in order to removeably attach the respective container element. A combination of Luer Loks and threads may also be used, such as Luer Loks for the first and second attachment ports and a thread for the third attachment port. This embodiment may be gathered from Fig. 1, which will be described in detail hereinafter.

According to another exemplary embodiment of the invention, a filtration device for controllably changing a concentration of a therapeutically active biomolecule in a pharmaceutical composition and for providing the pharmaceutical composition in a volume which is ready for administration, preferably subcutaneous administration, to a patient is presented. The device may comprise a filtering adapter and a first container element. The filtering adapter may comprise a filtration membrane and a first attachment port. The first container element may be removeably attached to the filtering adapter by means of the first attachment port. Furthermore, the filtration membrane and the first attachment port may be connected in the filtering adapter via a fluid channel, such that a fluid flow from the first container element via the port across the filtration membrane is facilitated and/or allowed.

Furthermore, the details described above and hereinafter with respect to the filtering adapter may equally apply to the filtration device which makes use of such a filtering adapter.

According to another exemplary embodiment of the invention, the first container element is a syringe which may be prefilled with a low concentration solution of the therapeutically active biomolecule.

By means of the filtration device according to the invention, a reduction of the volume of a pharmaceutical composition for subcutaneous injection can be achieved. This may minimize volume-related pain for the patient. By making use of the filtration membrane, which may be configured for example as an ultrafiltration membrane, the volume to be administered may be easily reduced, e.g. immediately prior to administration of the pharmaceutical composition.

According to another exemplary embodiment of the invention, a method of concentrating a therapeutically active biomolecule in a solution is presented. The method comprises a step of ultrafiltering the biomolecule solution to a concentrated solution, wherein the concentrated solution may be ready for administration to a subject, which subject may be a human or animal to whom the therapeutically active biomolecule is to be administered.

If desired, the ultrafiltration step may be carried out such that a structure and function of the biomolecule is preserved. In particular, the pressure used to effect a corresponding flow of the low concentration solution may be adjusted such that the functionality of the therapeutically active biomolecule is not affected.

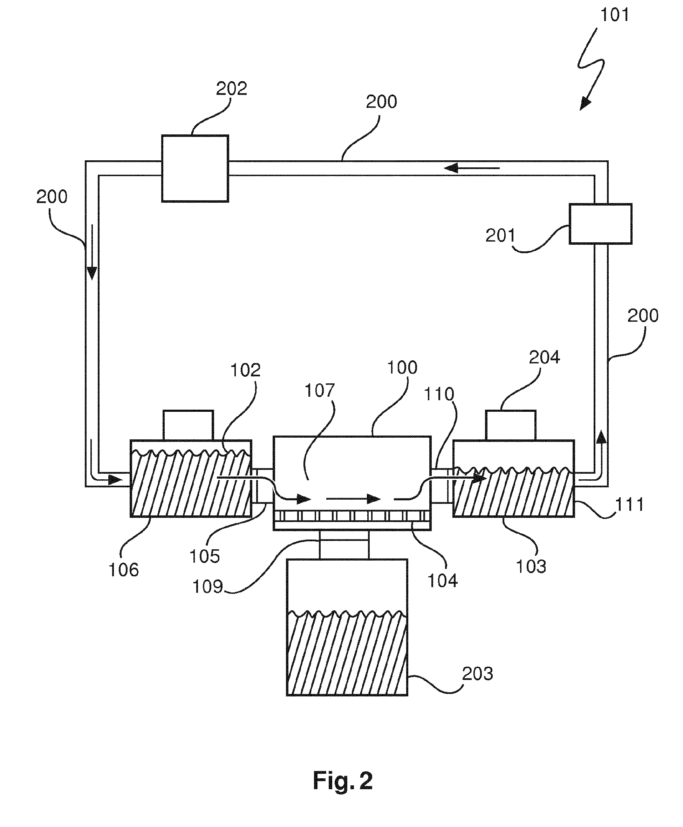

According to another exemplary embodiment, the method further comprises a step of initiating the ultrafiltration step by using or operating one or two syringes. As can be gathered from e.g. Fig. 1, a bidirectional pumping and sucking procedure with both syringes may allow for a back-and-forth movement of the pharmaceutical composition which leads to an increase of concentration. However, a unidirectional movement may also be effected which is indicated and can be gathered from Fig. 2.

According to another exemplary embodiment of the invention, the method further comprises a step of collecting a filtrate which may convey the filtration membrane to a third container element and/or a step of removeably attaching a second syringe to the filtering adapter at a second attachment port.

According to another exemplary embodiment of the invention, the method comprises a step of providing a first liquid volume of low concentration biomolecule solution.

In addition or alternatively, the method comprises a step of causing a flow of said first liquid volume across a filtration membrane of a filtering adapter leading to a second liquid volume of solution with an increased concentration of biomolecules. In addition or alternatively, the method comprises a step of directing the second volume of liquid from the filtering adapter into a device for directly administering the second liquid volume to a patient.

The second liquid volume may be guided into a syringe, which can be fluid-tightly fixed or attached to a filtering adapter. The syringe with the desired second liquid volume may than be detached from the filtration device, i. e. from the filtering adapter, and may be transported to the patient where the administration takes place.

According to another exemplary embodiment of the invention, the method comprises the steps of providing the filtering adapter, providing the first liquid volume in a first syringe, and removeably attaching the syringe to the filtering adapter at a first attachment port.

By means of the previously disclosed method steps, a fluid-tight fluid channel is established between the syringe and the filtering adapter, e.g. to facilitate subsequent tangential filtering.

According to another exemplary embodiment of the invention, the method comprises initiating the ultrafiltration step by either pushing a plunger of a syringe, or pulling a plunger of a syringe.

As can be gathered from e.g. Fig. 1, a back-and-forth movement of the pharmaceutical composition can be effected by pushing and/or pulling the syringe plungers, respectively. Valves and/or further pressure regulation means may be used in order to release air from the filtering adapter or in order to suck air into the filtering adapter in a controlled and desired manner. This may compensate for changes of the air pressure in the filtering adapter or the filtration device. According to another exemplary embodiment of the invention, the method comprises the steps of providing a fluid channel as a closed circuit by fluid-tightly connecting the filtering adapter, a first container element and a second container element in a circle.

The method may further comprise a step of causing a liquid flow across the filtration membrane in a circular manner in the closed circuit. This embodiment of the method may be performed for example by the device shown in Fig. 2. A circular liquid flow can be established such that the concentration increases with the number of circulations. Simultaneously, the filtrate may be collected in a tank or in a third container element.

According to another exemplary embodiment of the invention, the method comprises the steps of causing a liquid flow in either a unidirectional manner, or a unidirectional and circular manner, or a bidirectional manner.

Liquid flow over or across the filtration membrane in order to provide a filtering effect may be achieved by simultaneous or sequential liquid flow tangentially over the surface of the filtration membrane. Contact of the liquid with the filtration surface, such as e.g. the folded filter surface or the ultrafiltration surface or the folded ultrafiltration surface is achieved by unidirectional liquid flow, unidirectional and circular liquid flow and/or bidirectional liquid flow. For example, a pumping process in a unidirectional manner may be performed through the filtering adapter. Syringes may be used to generate the pumping pressure. However, electronic devices may also be used to generate such a liquid flow. In case valves are needed to compensate for changing air pressures, the present invention provides for appropriate valve techniques. A bidirectional liquid flow may be achieved by, for example, an alternating pushing and pulling movement of two syringes as depicted in the setup of Fig. 1.

According to another aspect of the invention, a use of a filtering adapter for changing a concentration of a therapeutically active biomolecule in a pharmaceutical composition and for providing the pharmaceutical composition in a volume, which is ready for administration to a patient, is presented, whereby the filtering adapter according to the previously and hereinafter disclosed embodiments may be used.

The presented method and uses may provide a concentrated solution which is ready for administration to the patient. Filtering of the biomolecule solution to a concentrated solution may be conducted immediately before administration to a patient.

These and other features of the invention will become apparent from and elucidated with reference to the embodiments described hereinafter.

### BRIEF DESCRIPTION OF THE DRAWINGS

Exemplary embodiments of the invention will be described in the following drawings.
Fig. 1 is schematic depiction of a filtration device according to an exemplary embodiment of the invention.
Fig. 2 is schematic depiction of a filtration device with a filtering adapter according to an exemplary embodiment of the invention.
Fig. 3 is schematic depiction of a filtering adapter according to an exemplary embodiment of the invention.
Figs. 4 to 7 are schematic depictions of different flow diagrams of methods according to different exemplary embodiments of the invention.

In principle, identical parts and features are provided with the same reference symbols in the Figures.

### DETAILED DESCRIPITON OF EMBODIMENTS

Fig. 1 shows a filtration device 101 for controllably changing a concentration of a therapeutically active biomolecule in a pharmaceutical composition and for providing the pharmaceutical composition in a volume which is ready for administration, e.g. for subcutaneous administration, to a patient. The device 101 comprises a filtering adapter 100, and a first container element 106 which is embodied as a syringe 113. The filtering adapter comprises a filtration membrane 104 and a first attachment port 105. In this embodiment the attachment port 105 is configured as a Luer Lok such that a fluid-tight fixation of syringe 113 to the filtering adapter 100 is ensured. The first container element, the syringe, is removeably attached to the filtering adapter via the first attachment port. Further, the filtration membrane and the first attachment port are connected in the filtering adapter via a fluid channel 107 such that a fluid flow from the first container element via the port and across the filtration membrane is facilitated, in turn facilitating. tangential filtering. The consumable product 100 allows for quick, reliable and easy handling of the filtration process. In this embodiment, the filtering adapter comprises a housing made out of a polymer material. If desired, a folded filter may also be used as the filtration membrane 104. Especially, ultrafiltration membranes can be used to achieve the desired increase of concentration. The prefilled syringe 113 having a rather low concentration of for example a therapeutic protein in combination with the filtering adapter 100 allows for an increase of the concentration of the solution directly before administration. The starting concentration at the beginning of the process may be for example 30 mg/ml, but also other values are possible. The final concentration may be as high as 100 or even 150 mg/ml, but other values are also possible. The angled position of the two attachment ports 105 and 110 may also vary for other embodiments. If desired, the filtration may also be improved by increasing the angle between the two syringes. This angle may be close or equal to 180°, such that a purely tangential filtration over filtration membrane 104 is achieved. More details about the angled position can be gathered from Fig. 3.

The second attachment port 110 fluid-tightly and removeably attaches the second container element 111 which is also configured as a syringe 114. The third attachment port 109 is configured to removeably attach a third container element such as a filtrate collector to the filtering adapter. Thread 108 facilitates a threadally engagement between the filtering adapter and the third container element. The shown housing and the filtration membrane and the syringes can be configured so as to be pressure-tight to a certain degree. The filtering adapter 100 allows applying only a pressure to the plungers of the syringes, such that the applied sheer force does not cause any degeneration of the therapeutically active biomolecule which is comprised by the pharmaceutical composition 102. The pharmaceutical composition which is provided in a volume ready for administration is designated by reference numeral 103.

By means of the filtering adapter 100 provided in Fig. 1, a unidirectional movement from the first syringe 113 to the second syringe 114 can be effected by pushing the plunger of the first syringe and by pulling the plunger of the second syringe. However, also a bidirectional movement can be effected, if the pushing and pulling procedure is applied in reverse with respect to the plungers of the first and second syringes 113 and 114. In principle, such a back-and-forth movement of the pharmaceutical composition 102 can be performed as often as desired or as necessary, until the desired concentration is achieved.

Fig. 2 shows a filtration device 101 comprising a filtering adapter 100 which provides for a closed circuit through which a liquid flow can be effected in a unidirectional closed circular manner. The filtration device 101 comprises a filtering adapter 100 and a first container element 106. Further, a filtration membrane which is configured as an ultrafiltration membrane is shown with reference sign 104 as well as first attachment port 105. The fluid channel is depicted as reference numeral 107 and indicated by arrows. The second attachment port 110 detaches the second container element 111 to the filtering adapter 100. In order to provide for a filtrate collector by i. e. the third container element 203, a third attachment port 109 is comprised by the filtering adapter 100. The fluid flow tangentially over or tangentially towards the filtration membrane 104 is indicated by arrows. Along this path the pharmaceutical composition 102 is guided. Ducts or pipe elements 200 are provided to establish a closed circuit of a fluid channel. Furthermore, a symbolic valve 201 is shown in Fig. 2, which can be used to release air in situations of an overpressure, or which can be used to feed the closed circuit with air from outside of the filtration device. Furthermore, an electronic device 202 is shown which may be used to facilitate the filtration process. For example, element 202 may be configured as a pump creating the desired pressure to generate the liquid flow. The filtration device 101 further comprises an attachment port 204 to which a syringe may be attached. After the desired concentration has been achieved, a syringe may be connected to attachment port 204, such that the volume which is ready for administration to the patient can for example be sucked out of the filtration device 101. However, there are also other possibilities to transfer a ready-to-use volume to a syringe.

According to another exemplary embodiment of the present invention the embodiment of Fig. 2 is slightly amended. In this embodiment (not shown), the electronic device 202 is embodied as pump is a positioned in flow direction between the first container element 106 and the filtering adapter 100. Thus, the second container element 111 is not needed in this embodiment as the highly concentrated solution may be taken or removed directly from the first container element 106. For this purpose, first container element 106 may comprise an attachment port similar to attachment port 204 of Fig. 2.

According to another exemplary embodiment of the present invention, Fig. 3 shows a filtering adapter 100 having a filtration membrane 104 and a first attachment port 105. Furthermore, a second attachment port 110 is shown on the right hand side. Each attachment port 105 and 110 provides for an opening 301, which opening is defined by a plane 302 and 303, respectively. The plane expands and covers the opening. The angle between the perpendicular 304 and 305 of the respective opening plane and the perpendicular 306 of the plane defined by the ultrafiltration membrane may be defined as angle α₁ and α₂. α₁ and α₂ may be chosen from the group consisting of α = 10°, α = 20°, α = 30°, α = 40°, α = 50° α = 60°, α = 70°, α = 80° and α = 90°. Furthermore, α₁ and α₂ may be chosen independently from each other for the two attachment ports. A symmetrical embodiment for the first and second attachment ports with identical angles α₁ and α₂ is also possible. In a specific embodiment, an oval shape is provided with α₁ = α₂ > 45°. Furthermore, it is also possible to position the attachment ports in an opposing direction, such that the angle between the attachment ports is 180°. This may provide for improved tangential filtering efficiency. Symbolically, Fig. 3 shows a pore 307 comprised by the filtration membrane 104. In case of an ultrafiltration membrane, such a pore size may be from 1 nm to 100 nm. Furthermore, the filtrate is depicted in Fig. 3 by reference numeral 308. The embodiment of Fig. 3 may be combined with the embodiments disclosed above. In addition or alternatively ultrafiltration membrane may provide for a molecular weight cut-off in the range between 10 kDa and 1000 kDa.

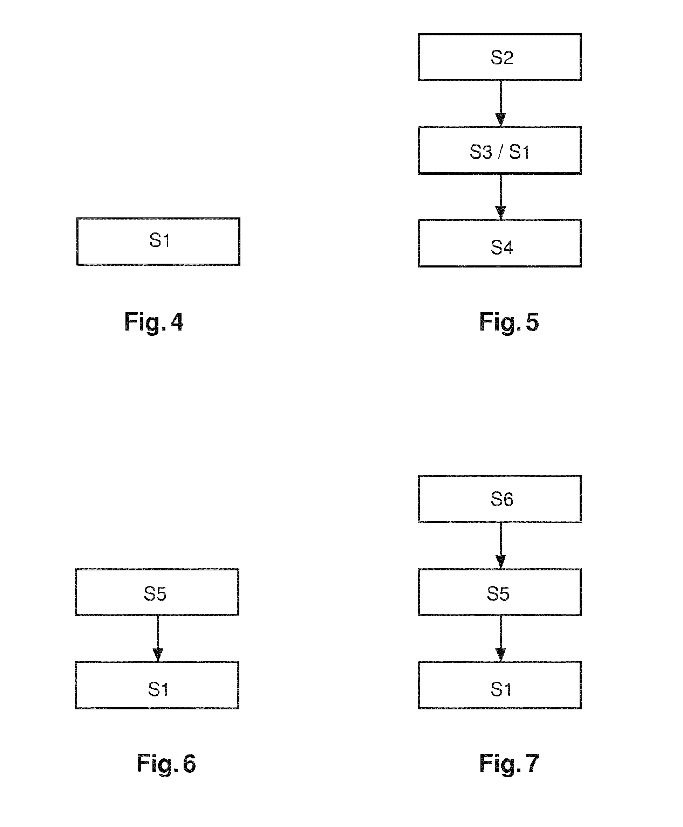

Fig. 4 shows a method of concentrating a therapeutically active biomolecule in a solution. The method of Fig. 4 comprises the step of ultrafiltering the biomolecule solution to a concentrated solution, wherein the concentrated solution is ready for administration to a subject. The ultrafiltration step is depicted as S1 in Fig. 4. By means of an ultrafiltration membrane, the concentration of a therapeutic protein or of other biomolecules in solution may be increased immediately before administration. Further, reducing the volume of a subcutaneous injection may result in improved patient compliance. Further, improved stability of the administered solution may be achieved.

According to another exemplary embodiment of the invention, Fig. 5 shows a first liquid volume of low concentration biomolecule solution provided by step S2. Furthermore, a flow of said first liquid volume across a filtration membrane of a filtering adapter is effected, which leads to a second liquid volume of solution with an increased concentration of biomolecules. This step is indicated with reference numeral S3. For example, an ultrafiltering step S1 may be performed. Moreover, a second volume of liquid may be directed from the filtering adapter into a device for directly administering the second liquid volume to a patient in step S4.

Fig. 6 depicts another exemplary embodiment of the present invention. In this embodiment, the step of ultrafiltering is initiated by at least one of pushing a plunger of a syringe or pulling a plunger of a syringe in step S5. After such initiation, the step S1 is carried out which describes ultrafiltering of the biomolecule solution in a volume which is ready for administration to the patient.

Fig. 7 provides for a method of concentrating a therapeutically active biomolecule in a solution by providing a fluid channel as a closed circuit by fluid-tightly connecting a filtering adapter, a first container element, and at least a second container element in a circle by step S6. Moreover, a liquid flow across the filtration membrane is effected in the closed circuit by step S7, such that ultrafiltering of the biomolecule solution to the concentrated solution is carried out, which is depicted by step S1. Thus, the concentrated solution is ready for immediate administration to a subject.

The embodiments of the methods shown in Figs. 4 to 7 can be easily combined by the skilled person without undue burden.

Other variations to the disclosed embodiments can be understood and effected by those skilled in the art in practicing the claimed invention, from a study of the drawings, the disclosure, and the appended claims. In the claims, the word "comprising" does not exclude other elements or steps and the indefinite article "a" or "an" does not exclude a plurality. The mere fact that different measures are recited in different dependent claims does not mean that a combination of these measures cannot be used to advantage. On the contrary, the skilled person will gather from the complete disclosure of the present invention that all features may be combined with each other unless explicitly stated to the contrary. Any reference numerals in the claims should not be construed as limiting the scope of the claims.

## Claims

1. Filtering adapter (100) for a filtration device (101), wherein the filtering adapter is for controllably changing a concentration of a therapeutically active biomolecule in a pharmaceutical composition (102) and for enabling a provision of the pharmaceutical composition in a volume (103) which is ready for administration, the filtering adapter comprising
a filtration membrane (104),
a first attachment port (105),
wherein the first attachment port is configured to removeably attach a first container element (106) to the filtering adapter, and
wherein the filtration membrane and the first attachment port are connected via a fluid channel (107) such that a fluid flow from the first attachment port across the filtration membrane is allowed.

2. Filtering adapter according to claim 1,
wherein the first attachment port comprises a Luer Lok for removeably attaching the first container element to the filtering adapter by means of a Luer Lok.

3. Filtering adapter according to claim 1 or 2,
wherein the filtration membrane is an ultrafiltration membrane.

4. Filtering adapter according to one of the preceding claims,
wherein the filtration membrane defines a first geometrical plane (300) along which first plane the filtration membrane expands, and
wherein the fluid channel (107) is arranged in the filtering adapter relative to the filtration membrane such that a fluid flow across the filtration membrane and parallel to the first geometrical plane is facilitated.

5. Filtering adapter according to one of the preceding claims, the filtering adapter further comprising
a second attachment port (110),
wherein the second attachment port is configured to removeably attach a second container element (111) to the filtering adapter.

6. Filtering adapter according to one of the preceding claims, the filtering adapter further comprising
a third attachment port (109),
wherein the third attachment port is configured to removeably attach a third container element (203) to the filtering adapter, and
wherein the third attachment port is located at a position relative to the filtration membrane such that a filtrate which passes through the filtration membrane is directed to the third attachment port.

7. Filtration device (101) for controllably changing a concentration of a therapeutically active biomolecule in a pharmaceutical composition (102) and for providing the pharmaceutical composition in a volume (103) which is ready for administration, preferably subcutaneous administration, to a patient, the device comprising
a filtering adapter (100),
a first container element (106),
wherein the filtering adapter comprises
a filtration membrane (104),
a first attachment port (105),
wherein the first container element is removeably attached to the filtering adapter by means of the first attachment port, and
wherein the filtration membrane and the first attachment port are connected in the filtering adapter via a fluid channel (107) such that a fluid flow from the first container element via the port and across the filtration membrane is facilitated/allowed.

8. Filtration device according to claim 7,
wherein the first container element is a syringe (113), which is prefilled with a low concentration solution of the therapeutically active biomolecule.

9. Method of concentrating a therapeutically active biomolecule in a solution, the method comprising the step of
ultrafiltering the biomolecule solution to a concentrated solution (S1),
wherein the concentrated solution is ready for administration to a subject.

10. Method according to claim 9, further comprising the steps of providing a first liquid volume of low concentration biomolecule solution (S2),
causing a flow of said first liquid volume across a filtration membrane of a filtering adapter leading to a second liquid volume of solution with an increased concentration of biomolecules (S3), and
directing the second volume of liquid from the filtering adapter into a device for directly administering the second liquid volume to a patient (S4).

11. Method according to one of claims 9 or 10, further comprising the steps of
providing the filtering adapter,
providing the first liquid volume in a first syringe,
removeably attaching the syringe to the filtering adapter at a first attachment port.

12. Method according to one of claims 9 to 11, further comprising initiating the step of ultrafiltering by at least one of pushing a plunger of a syringe or pulling a plunger of a syringe (S5).

13. Method according to one of claims 9 to 12, further comprising the steps of
providing a fluid channel as a closed circuit by fluid-tightly connecting the filtering adapter, a first container element and a second container element in a circle (S6), and
causing a liquid flow across the filtration membrane in a circular manner in the closed circuit (S7).

14. Method according to one of claims 9 to 13, further comprising the steps of
causing a liquid flow in either a unidirectional manner, or a unidirectional and circular manner, or a bidirectional manner.

15. Use of a filtering adapter according to one of claims 1 to 8 for changing a concentration of a therapeutically active biomolecule in a pharmaceutical composition and for providing the pharmaceutical composition in a volume which is ready for administration to a patient.
